# EUROPÄISCHE PATENTSCHRIFT

(11) **EP 1 183 306 B1**
(45) Veröffentlichungstag und Bekanntmachung des Hinweises auf die Patenterteilung: **17.12.2008**
(21) Anmeldenummer: 00910805.1
(22) Anmeldetag: 10.03.2000
(51) Int. Cl.: C08L 23/04, C08K 13/06, C08K 5/14, H01B 3/44

(54) **FLAMMGESCHÜTZTE POLYMERZUSAMMENSETZUNG**
FLAMEPROOF POLYMER COMPOSITION
COMPOSITION POLYMERE IGNIFUGE

(30) Priorität: 07.05.1999 DE 19921472
(43) Veröffentlichungstag der Anmeldung: 06.03.2002
(73) Patentinhaber: Rockwood Clay Additives GmbH, 85368 Moosburg (DE); Kabelwerk Eupen AG, 4700 Eupen (BE)
(72) Erfinder: SCHALL, Norbert, D-85659 Forstern (DE); ENGELHARDT, Thomas, D-85354 Freising (DE); SIMMLER-HÜBENTHAL, Hubert, D-85368 Moosburg (DE); BEYER, Günter, B-4700 Eupen (BE)
(74) Vertreter: Westendorp, Michael Oliver
(86) Internationale Anmeldenummer: PCT/EP2000/002115
(87) Internationale Veröffentlichungsnummer: WO 2000/068312

(56) Entgegenhaltungen:
- EP-A1- 0 466 193
- EP-A2- 0 239 986
- EP-A2- 0 474 252
- WO-A1-00/66657
- WO-A1-96/26240
- GB-A- 1 118 723
- PATENT ABSTRACTS OF JAPAN vol. 1999, no. 13, 30. November 1999 (1999-11-30) & JP 11 228748 A (SEKISUI CHEM CO LTD), 24. August 1999 (1999-08-24)

## Beschreibung

Von wenigen Ausnahmen abgesehen, sind die meisten Polymerwerkstoffe brennbar. Für viele Anwendungen in der Bau-, Möbel-, Fahrzeug- oder Elektronikindustrie ist es deshalb notwendig, polymere Werkstoffe feuerhemmend auszurüsten. Um den entsprechenden Zulassungen bzw. Normprüfungen zu genügen, werden Kunststoffen als Flammschutzmittel in großem Umfang z.B. halogen- oder phosphororganische Verbindungen zugesetzt (G. Gechta, H- Müller, Plastics Additives Handbook, Hanser Publishers 1993, Seiten 708 - 725).

Die an sich nicht toxischen halogenorganischen Verbindungen können im Brandfall gesundheitsbedenkliche und korrosive Pyrolysebestandteile freisetzen. Es hat daher nicht an Versuchen gefehlt, diese kritisch beurteilten organischen Flammschutzmittel durch andere organische Flammenschutzmittel wie Melamin oder durch anorganische Flammschutzmittel zu ersetzen. So werden u.a. Antimonoxid, roter Phosphor, Ammoniumpolyphosphat, und anorganische Borverbindungen als Flammschutzadditive in polymeren Werkstoffen allein oder in Kombination eingesetzt.

Als völlig untoxische und nichtkorrosive Flammschutzmittel werden in zunehmendem Maße Hydroxide von 2- und 3-wertigen Metallen eingesetzt. Besondere Bedeutung haben dabei Aluminium- und Magnesiumhydroxid erlangt (G. Kirschbaum Kunststoffe, 79,1989, Seiten 1205 -1208 und R. Schmidt, Kunststoffe 88,1998, Seiten 2058 - 2061). Beide Hydroxide setzen im Temperaturbereich zwischen 200 -400°C Wasser frei, welches durch die Verdampfung Energie aufnimmt und somit zu einer Kühlung des polymeren Werkstoffs führt. Darüber hinaus wird die Rauchdichte reduziert.

Als Nachteil dieser hydroxidischen Flammschutzmittel ist die sehr hohe Dosierung zu nennen, die notwendig ist, um Polymerwerkstoffe soweit flammgeschützt auszurüsten, daß die entsprechenden Brandprüfungen bestanden werden. Durch den hohen Füllgrad verschlechtern sich die Extrusions- und mechanischen Eigenschaften aber in hohem Maße.

Es hat daher nicht an Versuchen gefehlt, die Einsatzmenge dieser hydroxidischen Flammschutzmittel durch Kombination mit weiteren organischen bzw. anorganischen Flammschutzmitteln zu reduzieren.

So beschreiben beispielsweise die JP 63 273,693-A, JP 63 030,588-A, JP 62 101 644-A; sowie die EP 333514-A, beispielhaft flammgeschützte Polymerwerkstoffe und Beschichtungen, die Metallhydroxide als Flammschutzadditive und Tonmineralien, wie Kaolin, Glimmer, Vermiculit oder Bentonit bzw. Montmorillonit, als Füllstoff enthalten.

Die JP 55 112 248-A beschreibt flammgeschütze Polyolefinwerkstoffe für Kabelisolierungen, die Aluminiumhydroxid, Zinkborat, Calciumcarbonat, Talkum und Bentonit in einer Teilchengröße von 0,01 bis 30 µm enthalten.

Die JP 62 181 144 beschreibt flammgeschütze Polyester-, Polypropylen- und Polyvinylfluoridfolien, die phosphor-, stickstoff- oder halogenhaltige Flammschutzmittel enthalten und mit einer Mischung im Wasser quellfähigen Schichtsilicaten wie Montmorillonit, Vermiculit, oder Hectorit mit Silanen als Kupplungsmittel beschichtet sind.

Es sind auch Versuche bekannt, den Flammschutz durch Zusatz von organisch interkalierten Bentoniten bzw. Montmorilloniten zu verbessern. So beschreiben J. W. Gilmann und J.D. Lichtenhan (SAMPE Journal, Vol. 33,1997, Nr. 4, Seiten 40 - 46) sogenannte Kunststoff-Nanocomposite auf der Basis von Polyamid-6. Diese Werkstoffe bestehen aus einer Polyamid-6-Matrix, in der Montmorillonit-Partikel dispergiert sind, die zuvor mit Aminododecansäure interkaliert wurden. So führt ein Zusatz zwischen 2 und 5% dieser Nanocomposit-Füllstoffe zu einer Reduktion des "Peak-of-Heat-Release" (HRR) um bis zu 63%.

Da mit organisch interkalierten Schichtsilicat Füllstoffen als alleinigem Flammschutzzusatz kein ausreichender Flammschutz gewährleistet werden kann, wurden auch Versuche beschrieben, organisch interkalierte Tonmineralien mit anderen Flammschutzmitteln zu kombinieren.

Die EP 239 986-A beschreibt eine nichttropfende, flammgeschützte thermoplastische Copolyester-Zusammensetzung, die 5 bis 35% eines Flammschutzmittelgemischs enthält. Dieses Gemisch enthält eine brom- oder chlorhaltige Verbindung mit mindestens 50 % Br oder Cl, 0,2 bis 1,5 Gew.-Teile Antimonoxid je Gew.-Teil der brom-oder chlorhaltigen Verbindung, sowie mindestens 1 Gew.-Teil eines quaternisierten Bentonits als Anti-Abtropfmittel, 5 bis 100 Gew.-Teile Aluminiumhydroxid und bis zu 100 Gew.-Teile Calciumcarbonat, jeweils bezogen auf 100 Gew.-Teile Copolyester. Der Zusatz von Aluminiumhydroxid bzw. Calciumcarbonat soll die Rauchdichte reduzieren und die Krustenbildung erhöhen.

Die US-A5 773 502 beschreibt ein nichttropfendes, flammgeschütztes thermoplastisches Polyestermaterial, welches die folgenden Flammschutzzusätze enthält: 5 bis 20 Gew.-% halogenhaltiges organisches Flammschutzmittel, 1 bis 5 Gew.-% Antimonoxid, 0,25 bis 5 Gew.-% eines organophilen Tons und 0,02 bis 2 Gew.-% eines fluorhaltigen Polymers.

Die GB-A 1 14 174 beschreibt eine Polymerzusammensetzung, welche neben dem Basispolymer (Polyamid, Polystyrol oder Polyolefin) 0,5 bis 50 Gew.-% eines Flammschutzmittels und bis zu 10 Gew.-% eines mit organischen Kationen modifizierten Bentonits enthält. Als Flammschutzmittel werden neben halogenierten organischen Verbindungen Phosphorsäureester, Antimontrioxid oder Arsentrioxid verwendet. Die Verwendung von Magnesium-, Calcium- oder Aluminiumhydroxid als Flammschutzmittel ist nicht beschrieben.

Die EP 132 228-A beschreibt flammwidrig verstärkte Polyesterformmassen mit 3 bis 50 Gew.-% Verstärkungsfüllstoff (bevorzugt Glasfasern) 5 bis 30 Gew.-% eines flammenhemmenden Zusatzes, 0,2 bis 4 Gew.-% eines ggf. organisch modifizierten Schichtsilicats als Anti-Abtropfmittel, und 0,05 bis 2 Gew.-% eines Alkalimetallsalzes einer Monocarbonsäure mit 6 bis 22 C-Atomen.

Als Anti-Abtropfmittel werden bevorzugt quaternisierte Bentonite, wie Bentone^{®} 27, 34, 38, eingesetzt. Geeignete flammhemmende Zusätze sind bevorzugt organische Halogenverbindungen allein oder in Kombination mit Antimontrioxid. Es fehlt jeder Hinweis auf die Verwendung von Hydroxiden als Flammschutzadditive.

Allen zuvor beschriebenen Mischungen aus organisch modifiziertem Schichtsilicat und weiteren Flammschutzadditiven ist gemeinsam, daß diese Mischungen mehr oder weniger toxische und/oder im Brandfall korrosive Bestandteile enthalten.

Aus der EP 0 893 469-A sind flammgeschützte, halogenfreie Polymerzusammensetzungen bekannt, die ein Gemisch aus verschiedenen Polymeren oder Copolymeren und einem anorganischen Füllstoff, wie Aluminiumtrihydrat oder Magnesiumhydroxid, enthalten.

Die WO-A-0066657, die gemäß Art. 54(3) und (4) EPÜ als Stand der Technik zu berücksichtigen ist, beschreibt eine Polymerzusammensetzung, enthaltend eine Kombination aus einem Polymer und einem synergistischen Flammschutzadditiv mit einem Nano-Clay und einem zweiten Füllstoff.

Es wurde nun überraschenderweise gefunden, daß es zu einem synergistischen Flammschutzeffekt in flammgeschützten Polymermischungen kommt, die neben Metallhydroxiden, organisch interkalierten Schichtsilicaten und ggf. weiteren anorganischen Flammschutzmitteln im wesentlichen keine weiteren halogen- oder phosphororganischen Flammschutzmittel enthalten.

Gegenstand der Erfindung ist somit eine flammgeschützte, im wesentlichen halogenfreie Polymerzusammensetzung gemäß Anspruch 1.

Vorzugsweise ist der Schichtabstand des organisch interkalierten Schichtsilicats im Polymer um mindestens 10% größer als der.des Ausgangs-Schichtsilicats.

Entwicklungsziel war es dabei, flammgeschützte Polymerzusammensetzungen bereitzustellen, bei denen auf die Verwendung von organischen Halogenverbindungen bzw. organischen Phosphorsäureverbindungen verzichtet werden kann, da derartige Substanzen im Brandfall toxische und/oder korrosive Gase freisetzen.

Unter "im wesentlichen halogenfrei" versteht man erfindungsgemäß Polymerzusammensetzungen, deren Halogengehalt (bezogen auf die niedermolekularen zugesetzten Halogenverbindungen) unter 5 Gew.-%, vorzugsweise unter 2 Gew.-% liegt. Falls es sich bei den Polymeren um halogenhaltige Polymere (z.B. PVC) handelt, so wird deren Halogengehalt hierbei nicht berücksichtigt.

Durch die Weglassung der organischen Halogenverbindungen wird überraschenderweise eine Verbesserung der mechanischen Eigenschaften und der Krustenbildung (charring) erzielt.

Der erfindungsgemäße Effekt beruht wahrscheinlich darauf, daß der röntgenographisch bestimmte Schichtabstand des organisch interkalierten Schichtsilicats durch den Einbau der Polymermoleküle erweitert wird, und daß die organischen Halogenverbindungen an den Schichtsilicaten gebunden werden, so daß sie im Brandfall nicht mehr als Radikalfänger in der Gasphase wirken können und die bei der Verbrennung ablaufenden Radikal kettenreaktionen ungestört ablaufen können. Der Zusatz des organisch interkalierten Schichtsilicats ohne die gleichzeitige Verwendung einer organischen Halogenverbindung bewirkt eine bedeutende Verbesserung der mechanischen Eigenschaften bei vergleichbaren Flammschutzeigenschaften, desgleichen auch eine Verbesserung der Krustenbildung.

Die erfindungsgemäß verwendeten Hydroxide bzw. Doppelhydroxide des Magnesiums, Calciums, Zinks und/oder Aluminiums setzen im Brandfall ausschließlich Wasser frei und bilden daher keine toxischen oder korrosiven Rauchgasprodukte. Darüberhinaus sind diese Hydroxide in der Lage, die Rauchgasdichte im Brandfall zu reduzieren.

Das erfindungsgemäß verwendete Polymer (a) ist vorzugsweise ausgewählt aus Polyolefinen (wie Polyethylenen, Polypropylenen oder Polybutenen) ; Vinylpolymeren (wie Polyvinylchlorid oder Polyvinylidenchlorid); Styrolpolymeren; Polyacrylnitril; Polyacrylaten und -methacrylaten; Natur- und Synthesekautschuken; Fluor-Kunststoffen (wie Tetrafluorethylen oder Polyvinylfluorid); thermoplastischen Polykondensaten (wie Polyamiden, Polyestern, Polycarbonaten, Polyethylenterephtalat); duroplastischen Polykondensaten (wie Phenol-Formaldehyd-Kunststoffen, Harnstoff-Formaldehyd-Kunststoffen, Melamin-Formaldehyd-Kunststoffen, ungesättigten Polyesterharzen, Silikonharzen, Polyimiden); duroplastischen und thermoplastischen Polyaddukten (wie Epoxidharzen, Polyurethanen und Isocyanatharzen); Co- oder Terpolymeren sowie gepfropften Polymeren daraus; und deren Abmischungen.

Eine Zusammenstellung von geeigneten Kunststoffen findet sich bei Hans Domininghaus "Die Kunststoffe und ihre Eigenschaften", zweite Auflage, VDI-Verlag, Seiten VII bis XI.

Um die für die verschiedenen Anwendungen notwendige Flammfestausrüstung zu erreichen, beträgt der Anteil der Hydroxide (b) vorzugsweise etwa 30 bis 80 Gew.-%. Bei höheren Füllgraden verschlechtern sich die mechanischen Eigenschaften der entsprechenden Polymerwerkstoffe in einer nicht akzeptablen Weise. So gehen insbesondere die für die Kabelisolierung wichtige Zugfestigkeit und Reißdehnung auf ein nicht akzeptables Maß zurück.

Überraschenderweise wurde aber gefunden, daß die Zugabemenge der Flammschutzhydroxide (b) ganz erheblich reduziert werden kann, wenn als weitere Flammschutzadditive organisch interkalierte Schichtsilicate (c) in die Polymermischungen eingearbeitet werden. Es zeigt sich ein synergistischer Effekt zwischen diesen organisch interkalierten Schichtsilicaten und den Flammschutzhydroxiden. So kann beispielsweise durch den Zusatz von 5 Gew.-% des organisch interkalierten Schichtsilicats der Aluminiumhydroxidanteil um 15% reduziert werden, wodurch es bei verbessertem Flammschutz zu einer höheren Reißdehnung und einer reduzierten Verarbeitungsviskosität kommt.

Die Metallhydroxide (b) haben eine spezifische Oberfläche von 3 bis 150 m²/g, insbesondere von etwa 3 bis 50 m²/g,

Die Metallhydroxide (b) können an der Oberfläche modifiziert, vorzugsweise hydrophobiert sein, z.B. mit Hilfe von Silanen.

Als Ausgangsmaterialien für die organisch interkalierten Schichtsilicate (c) werden vorzugsweise quellfähige Smectite, wie Montmorillonit, Hectorit, Saponit oder Beidellit, eingesetzt.

Die organisch interkalierten Schichtsilicate haben einen Schichtabstand von etwa 1,5 bis 4 nm. Vorzugsweise sind diese Schichtsilicate mit quaternären Ammoniumverbindungen, protonierten Aminen, organischen Phosphoniumionen und/oder Aminocarbonsäuren interkaliert.

Vorzugsweise können etwa > 1 bis 100 Gew.-Teile weiterer halogenfreier Flammschutzadditive, wie Antimonoxid, roter Phosphor, Zinksulfid, Melaminderivate, organische Phosphorverbindungen und/oder anorganische Borverbindungen zugesetzt werden.

Die Erfindung ist durch die nachstehend angegebenen Beispiele erläutert.

### Beispiele 1 bis 8

### 1. Verwendete Ausgangsmaterialien

| | |
|---|---|
| Polymer: | 4 Gew.-Teile Polyethylen mit niedriger Dichte (Escorene^{®} LLN 1001 XV von Exxon) + 1 Gew.-Teil Ethylenvinylacetat-Copolymer (EVA Escorene^{®} UL 00328 von Exxon) |
| Organisch interkaliertes | |
| Schichtsilicat: | (Herst. nachst. beschrieben) |
| Aluminiumhydroxid: | Martinal^{®} OL 104LE (Martinswerk) |
| Magnesiumhydroxid: | Magnifin^{®} H 5 (Martinswerk) |

### 2. Herstellung des organisch interkalierten Schichtsilicats

2,5 kg getrockneter natürlicher Natriumbentonit (Volclay^{®} SPV) werden in 100 Liter demineralisiertem Wasser unter Verwendung eines Rührwerks eingerührt. Diese Suspension wird noch 24 h bei Raumtemperatur weitergerührt. Anschließend wird die Suspension auf 85°C aufgeheizt, und es wird ebenfalls unter kräftigem Rühren eine auf 80°C erhitzte Lösung, die 1,6 kg Dimethyldistearylammoniumchlorid und 30 Liter demineralisiertes Wasser enthält, über einen Zeitraum von 60 Minuten zudosiert. Nach beendeter Zugabe der Interkalationskomponente wird ebenfalls bei 85°C noch 5 h weitergerührt. Anschließend wird die auf 50°C abgekühlte Suspension in eine Filterkammerpresse gegeben, abfiltriert und mit 1000 Liter demineralisiertem Wasser gewaschen. Der erhaltene Niederschlag wird anschließend 24 h in einem Umluftofen bei 110°C getrocknet. Das getrocknete Produkt wird abschließend mit einer Schlagstiftmühle auf eine Korngröße < 63 µm vermahlen. Der röntgenometrisch bestimmte Schichtabstand beträgt 2,8 nm.

### 3. Herstellung der Polymercompounds

Zunächst werden pulverförmiges, interkaliertes Schichtsilicat, Aluminiumhydroxid bzw. Magnesiumhydroxid und ggf. weitere pulverförmige Additive manuell gemischt und anschließend mit den Polymergranulaten gravimetrisch auf einen Laborkneter (MDK 46 mit 11 L/D der Firma Buss, Schweiz) aufgegeben und bei Temperaturen um 150°C für Aluminiumhydroxid und 220°C für Magnesiumhydroxid compoundiert. Die Aufgabemenge beträgt 10 kg/h. Die compoundierte Mischung wird als Doppelstrang aus der Compoundiermaschine abgezogen, über einem Wasserbad abgekühlt und anschließend in einem Granulator zu Granulat mit einem Durchmesser von 2 bis 3 mm und einer Länge von 2 bis 5 mm abgeschnitten. Das erhaltene Granulat wird anschließend 10 h bei 90°C im Umluftofen getrocknet.

### 4. Extrusion von Probemustern

Das getrocknete Granulat wird auf einem Einschneckenextruder der Firma Leistritz, Nürnberg, zu einem Band mit etwa 3 mm Dicke extrudiert, um Probekörper zu Ermittlung der mechanischen Eigenschaften herzustellen.

### 5. Cone-Calorimetertest

Nach ASTM E 1345 und ISO 5660. Die Platten für die Cone-Versuche wurden auf einer Presse der Firma Schwabenthan hergestellt.

### 6. Bestimmung der mechanischen Eigenschaften

Die Bestimmung des Zug-E-Moduls erfolgte nach DIN 53457 mit einer Zuggeschwindigkeit von 1 mm/min.

Die Bestimmung der Zugfestigkeit (ZF) erfolgte nach DIN 53455.

Die Bestimmung der Reißdehnung (RD) erfolgte ebenfalls nach DIN 53455.

Die Bestimmung des Volumenfließindex (MFI) erfolgte nach DIN 53735.

### 7, Bestimmung des LOI (Limiting Oxygen Index)

Die Bestimmung des LOI erfolgte nach ISO 4589, Part 2.

Die Zusammensetzungen und die Ergebnisse für die Beispiele 1 bis 8 sind in Tabelle I angegeben. Die Beispiele. 1, 2, 4 und 6 sind Vergleichsbeispiele ohne Al(OH)₃ bzw. ohne organisch interkaliertes Schichtsilicat. Vergleichsbeispiel 8 enthält kein organisch interkaliertes Schichtsilicat und keine Hydroxide. Die Werte für PHR, Ti und RD sind durchwegs schlechter als bei den erfindungsgemäßen Beispielen 3, 5 und 7.

**TABELLE I**

| Beispiel | 1 | 2 | 3 | 4 | 5 | 6 | 7 | 8 |
|---|---|---|---|---|---|---|---|---|
| Polymer | 100,00 | 45,00 | 45,00 | 45,00 | 45,00 | 45,00 | 45,00 | 100,00 |
| Al(OH)₃ | | 55,00 | 55,00 | 40,00 | 40,00 | | | |
| Mg(OH) ₂ | | | | | | 55,00 | 55,00 | |
| org**.** interkal. Schichtsilicat | 5,00 | | 5,00 | | 5,00 | | 5,00 | |
| PHR (RW/m²) | 488 | 202 | 105 | 302 | 189 | 191 | 85 | 1215 |
| Ti (s) | 72 | 128 | 174 | 124 | 175 | 212 | 287 | 32 |
| ASSEA (m²/kg) | | 3150 | 1600 | 3900 | 1810 | 3700 | 1850 | |
| LOI | 21 | 32 | 34 | 27 | 29 | 36 | 39 | 19 |
| ZF (MPa) | 19 | 15 | 14 | 13,5 | 13 | 14 | 13 | 20 |
| RD (%) | 650 | 250 | 240 | 320 | 300 | 220 | 200 | 680 |
| MFI (g/10 min) | 4,0 | 2,2 | 2,0 | 2,8 | 2,6 | 2,0 | 1,9 | 4,0 |

| | | | | | | | | |
|---|---|---|---|---|---|---|---|---|
| - PHR: Peak of heat release - Ti: Time to ignition - ASSEA: Average Specific Smoke Extinction Area - ZF: Zugfestigkeit - RD: Reißdehnung - MFI: Volumenfließindex (melt flow index) bei 150°C mit 21,6 kg | | | | | | | | |

### Beispiele 9 bis 11

Es wurde nach der Arbeitsweise der Beispiele 1 bis 8 gearbeitet, mit der Abweichung, daß die Polymermischung nach diesen Beispielen zusammen mit bis-(tert.-Butylperoxyisopropyl)-benzol als Vernetzer (Peroxan^{®} BIB) im Verhältnis 100:6 verwendet wurde.

Die Zusammensetzung und die Ergebnisse sind in Tabelle II angegeben. Die Vergleichsbeispiele 9 und 10 zeigen gegenüber dem erfindungsgemäßen Beispiel 11 schlechtere PHR-, RD- und Ti-Werte, wobei die Abwesenheit von Al(OH)₃ im Vergleichsbeispiel 9 zu besonders schlechten Ergebnissen führt.

**TABELLE II (Vernetzte Mischung)**

| Beispiel | 9 | 10 | 11 |
|---|---|---|---|
| Polymer | 100,00 | 45,00 | 45,00 |
| Al(OH)₃ | | 55,00 | 55,00 |
| org. interkal. Schichtsilicat | 5,00 | | 5,00 |
| PHR (KW/m²) | 450 | 190 | 98 |
| Ti (s) | 70 | 121 | 165 |
| ASSEA (m²/kg) | | 3030 | 1580 |
| LOI | 21 | 32 | 34 |
| ZF (MPa) | 20 | 17 | 15 |
| RD (%) | 480 | 190 | 160 |

### Beispiele 12 bis 19

Es wurde nach der Arbeitsweise der Beispiele 1 bis 8 gearbeitet, mit der Abweichung, daß als Polymer für die Beispiele 12 bis 15 ein Polyamid (Grilamide^{®} L16L von EMS-Chemie und als Polymer für die Beispiele 16 bis 19 ein Polystyrol (Vestyron^{®} 106 von Hüls) verwendet wurde.

Die Zusammensetzung und die Ergebnisse sind in Tabelle III angegeben. Die Vergleichsbeispiele 12, 13, 15, 16, 17 und 19 zeigen gegenüber den erfindungsgemäßen Beispielen 14 und 18 schlechtere PHR- und Ti-Werte, wobei die Abwesenheit von Mg(OH)₂ in den Vergleichsbeispielen 12, 15, 16 und 19 zu besonders schlechten Ergebnissen führt.

**TABELLE III (Thermoplastische Mischung**

| Beispiel | 12 | 13 | 14 | 15 | 16 | 17 | 18 | 19 |
|---|---|---|---|---|---|---|---|---|
| Polymer | 100,00 | 45,00 | 45,00 | 100,00 | 100,00 | 45,00 | 45,00 | 100,00 |
| Mg(OH)₂ | | 55,00 | 55,00 | | | 55,00 | 55,00 | |
| org. interkal. Schichtsilicat | 5,00 | | 5,00 | | 5,00 | | 5,00 | |
| PHR (KW/m²) | 450 | 190 | 100 | 1060 | 400 | 180 | 120 | 1170 |
| Ti (s) | 70 | 135 | 182 | 35 | 69 | 135 | 179 | 42 |

### Beispiele 20 bis 24

Es wurde nach der Arbeitsweise der Beispiele 1 bis 8 gearbeitet, mit der Abweichung, daß als Polymer Polypropylen, gepfropft mit Maleinsäureanhydrid (Fusabond^{®} MD511-D von DuPont) verwendet wurde. Weiterhin enthielten die Vergleichsbeispiele 22 und 23 als Flammschutzmittel Decabromdiphenyloxid (Adine^{®} 102 von Atochem) und Sb₂O₃ im Gewichtsverhältnis 1:3. Das erfindungsgemäße Beispiel 20 zeigte durchwegs bessere PHR- und Ti-Werte als die Vergleichsbeispiele.

Die Zusammensetzung und die Ergebnisse sind in Tabelle IV angegeben.

**TABELLE IV**

| Beispiel | 20 | 21 | 22 | 23 | 24 |
|---|---|---|---|---|---|
| Polymer | 45,00 | 100,00 | 80,00 | 80,00 | 100,00 |
| Bromhaltiger Flammschutz | | | 20,00 | 20,00 | |
| Al(OH)₃ | 40,00 | | | | |
| org. interkal. Schichtsilicat | 5,00 | 5,00 | | 5,00 | |
| PHR (KW/m²) | 770 | 945 | 825 | 940 | 2050 |
| Ti (S) | 115 | 60 | 92 | 62 | 31 |

## Patentansprüche

1. Flammgeschützte, im Wesentlichen halogenfreie Polymerzusammensetzung, enthaltend:
a) 100 Gew.-Teile eines thermoplastischen, vernetzbaren bzw. vernetzten, elastomeren und/oder duroplastischen Polymers;
b) 10 bis 200 Gew.-Teile Magnesium-, Calcium-, Zink- und/oder Aluminiumhydroxid und/oder deren Doppelhydroxide, wobei die vorstehenden Metallhydroxide eine spezifische Oberfläche von etwa 3 bis 150 m²/g aufweisen;
c) 1 bis 50 Gew.-Teile eines organisch interkalierten Schichtsilicats.

2. Zusammensetzung nach Anspruch 1, **dadurch gekennzeichnet, dass** der Schichtabstand des organisch interkalierten Schichtsilicats um mindestens 10% größer ist als der des Ausgangs-Schichtsilicats.

3. Zusammensetzung nach Anspruch 1 oder 2, **dadurch gekennzeichnet, dass** das Polymer (a) ausgewählt ist aus: Polyolefinen; Vinylpolymeren; Styrolpolymeren; Polyacrylnitril; Polyacrylaten und -methacrylaten; Natur- und Synthesekautschuken; Fluor-Kunststoffen; thermoplastische Polykondensaten; duroplastischen Polykondensaten; duroplastischen und thermoplastischen Polyaddukten; Co- oder Terpolymeren sowie gepfropften Polymeren daraus; und deren Abmischungen.

4. Zusammensetzung nach einem der Ansprüche 1 bis 3, **dadurch gekennzeichnet, dass** die Metallhydroxide (b) an der Oberfläche modifiziert, vorzugsweise hydrophobiert sind.

5. Zusammensetzung nach einem der Ansprüche 1 bis 4, **dadurch gekennzeichnet, dass** als Ausgangsmaterialien für die organisch interkalierten Schichtsilicate quellfähige Smektite, wie Montmorillonit, Hectorit, Saponit oder Beidellit eingesetzt werden.

6. Zusammensetzung nach einem der Ansprüche 1 bis 5, **dadurch gekennzeichnet, dass** die organisch interkalierten Schichtsilicate einen Schichtabstand von etwa 1,5 bis 4 nm aufweisen.

7. Zusammensetzung nach einem der Ansprüche 1 bis 6, **dadurch gekennzeichnet, dass** die Schichtsilicate mit quaternären Ammoniumverbindungen, protonierten Aminen, organischen Phosphoniumionen und/oder Aminocarbonsäuren interkaliert sind.

8. Zusammensetzung nach einem der Ansprüche 1 bis 7, **dadurch gekennzeichnet, dass** sie etwa > 1 bis 100 Gew.-Teile weiterer halogenfreier Flammschutzadditive, wie Antimonoxid, roten Phosphor, Zinksulfid, Melaminderivate, organische Phosphorverbindungen und/oder anorganische Borverbindungen enthält.

## Claims

1. A flameproof, substantially halogen-free polymer composition, containing:
a) 100 parts by weight of a thermoplastic, cross-linkable or cross-lined, elastomeric and/or thermosetting polymer;
b) 10 to 200 parts by weight of magnesium, calcium, zinc and/or aluminium hydroxide and/or the double hydroxides thereof, wherein said metal hydroxides have a specific surface area of approximately 3 to 150 m²/g;
c) 1 to 50 parts by weight of an organically intercalated layered silicate.

2. A composition according to Claim 1, **characterised in that** the layer spacing of the organically intercalated layered silicate is at least 10 % greater than that of the original layered silicate.

3. A composition according to Claim 1 or 2, **characterised in that** the polymer (a) is chosen from: polyolefins; vinyl polymers; styrene polymers; poly-acrylonitrile; polyacrylates and methacrylates; natural and synthetic rubbers; fluoro plastics materials; thermoplastic polycondensates; thermosetting polycondensates; thermosetting and thermoplastic addition polymers; co or terpolymers, as well as polymers grafted therefrom, and mixtures thereof.

4. A composition according to any one of Claims 1 to 3, **characterised in that** the metal hydroxides (b) are modified on the surface, preferably are given a water-repellent finish.

5. A composition according to any one of Claims 1 to 4, **characterised in that** smectites capable of swelling, such as montmorillonite, hectorite, saponite or beidellite, are used as starting materials for the organically intercalated layered silicates.

6. A composition according to any one of Claims 1 to 5, **characterised in that** the organically intercalated layered silicates have a layer spacing of approximately 1.5 to 4 nm.

7. A composition according to any one of Claims 1 to 6, **characterised in that** the layered silicates are intercalated with quaternary ammonium compounds, protonated amines, organic phosphonium ions and/or aminocarbonic acids.

8. A composition according to any one of Claims 1 to 7, **characterised in that** it contains approximately > 1 to 100 parts by weight of further halogen-free flameproofing sulphide, melamine derivatives, organic phosphorus compounds and/or inorganic boron compounds.

## Revendications

1. Composition polymère ignifuge essentiellement exempte d'halogène, comprenant:
a) 100 parties en poids d'un polymère thermoplastique, réticulable ou réticulé, élastomère et/ou duroplastique;
b) 10 à 200 parties en poids d'hydroxyde de magnésium, de calcium, de zinc et/ou d'aluminium et/ou leurs hydroxydes doubles, les hydroxydes métalliques précédents présentant une surface spécifique allant d'environ 3 à 150 m2 /g;
c) 1 à 50 parties en poids d'un phyllosilicate intercalé organique.

2. Compositions selon la revendication 1, **caractérisée en ce que** la distance entre les couches du phyllosilicate intercalé organique est supérieure d'au moins 10 % à celle du phyllosilicate de départ.

3. Composition selon la revendication 1 ou 2, **caractérisée en ce que** le polymère (a) est choisi parmi les polyoléfines; les polymères vinyliques; les polymères styréniques; le polyacrylonitrile; les polyacrylates et -méthacrylates; les caoutchoucs naturels et synthétiques; les matières plastique fluorées; les polycondensats thermoplastiques; les polycondensats duroplastique; les polyadduits duroplastiques et thermoplastiques; les co- ou termpolymères ainsi que les polymères greffés de ceux-ci, et leurs mélanges.

4. Composition selon l'une quelconque des revendications 1 à 3, **caractérisée en ce que** les hydroxydes métalliques (b) sont modifiés en surface, de préférence rendus hydrophobes.

5. Composition selon l'une quelconque des revendications 1 à 4, **caractérisée en ce que** l'on met en oeuvre comme matériaux de départ pous les phyllosilicates intercalés organiques, des smectites gonflables com la montmorillonite, l'hectorite, la saponite ou la beidellite.

6. Compositions selon l'une quelconque des revendications 1 à 5, **caractérisée en ce que** les phyllosilicates intercalés organiques présentent und distance entre les couches d'environ 1,5 à 4 nm.

7. Compositions selon l'une quelconque des revendications 1 à 6, **caractérisée en ce que** les phyllosilicates sont intercalés avec des composés ammonium quaternaire, des amines protonées, des ions phosphonium organique et/ou des acides aminocarboxyliques.

8. Compositions selon l'une quelconque des revendications 1 à 7, **caractérisée en ce qu'**elle contient environ > 1 à 100 parties en poids d'autres additifs ignifuges exempts d'halogène, comme l'oxyde d'antimoine, le phosphore rouge, des composés organiques du phosphore et/ou des composés inorganiques du bore.
